(19) **Europäisches Patentamt / European Patent Office / Office européen des brevets**

(11) **EP 2 442 482 B1**

(12) **EUROPEAN PATENT SPECIFICATION**

(45) Date of publication and mention of the grant of the patent:
**14.09.2016 Bulletin 2016/37**

(21) Application number: **09845692.4**

(22) Date of filing: **12.06.2009**

(51) Int Cl.:
**H04L 9/22** *(2006.01)*

(86) International application number:
**PCT/CN2009/072257**

(87) International publication number:
**WO 2010/142083 (16.12.2010 Gazette 2010/50)**

(54) **METHOD AND DEVICE FOR IMPLEMENTING STREAM CIPHER**

VERFAHREN UND VORRICHTUNG ZUR IMPLEMENTIERUNG EINES STREAM-CODES

PROCÉDÉ ET DISPOSITIF ADAPTÉS POUR METTRE EN ŒUVRE UN CHIFFRE CONTINU

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **12.06.2009 CN 200910086409**

(43) Date of publication of application:
**18.04.2012 Bulletin 2012/16**

(73) Proprietor: **Data Assurance And Communication Security Center, Chinese Academy of Sciences Beijing 100049 (CN)**

(72) Inventors:
• **FENG, Dengguo**
  **Beijing 100049 (CN)**
• **JIN, Chenhui**
  **Beijing 100049 (CN)**
• **QI, Wenfeng**
  **Beijing 100049 (CN)**
• **WU, Wenling**
  **Beijing 100049 (CN)**
• **WANG, Kunpeng**
  **Beijing 100049 (CN)**
• **GUAN, Jie**
  **Beijing 100049 (CN)**
• **ZHU, Xuanyong**
  **Beijing 100049 (CN)**
• **ZHANG, Yiwei**
  **Beijing 100049 (CN)**
• **HU, Yupu**
  **Beijing 100049 (CN)**
• **ZHANG, Bin**
  **Beijing 100049 (CN)**
• **ZHANG, Wenzheng**
  **Beijing 100049 (CN)**
• **FENG, Xiutao**
  **Beijing 100049 (CN)**
• **QIAN, Lisong**
  **Beijing 100049 (CN)**
• **ZHANG, Wentao**
  **Beijing 100049 (CN)**
• **SUN, Zhonghua**
  **Beijing 100049 (CN)**

(74) Representative: **Awapatent AB**
  **P.O. Box 45086**
  **104 30 Stockholm (SE)**

(56) References cited:
WO-A1-2007/060587      WO-A1-2009/014157
CN-A- 1 426 191        CN-A- 101 242 265
US-A1- 2003 152 219    US-A1- 2007 244 951

• SELIMIS G ET AL: "High performance cryptographic engine PANAMA: hardware implementation", ELECTRONICS, CIRCUITS AND SYSTEMS, 2004. ICECS 2004. PROCEEDINGS OF TH E 2004 11TH IEEE INTERNATIONAL CONFERENCE ON TEL AVIV, ISRAEL DEC. 13-15, 2004, PISCATAWAY, NJ, USA,IEEE, 13 December 2004 (2004-12-13), pages 575-578, XP010774228, DOI: 10.1109/ICECS.2004.1399746 ISBN: 978-0-7803-8715-7
• ZHANG, YU'AN ET AL.: 'European Stream Cipher Encryption Standard Assessment of Competing' INFORMATION SECURITY AND COMMUNICATIONS PRIVACY vol. 3, March 2003, pages 38 - 41, XP008148497

**(Cont. next page)**

- **ENGLUND, H. ET AL.: 'Attack the Dragon' ECRYPT, [Online] April 2007, XP019025584 Retrieved from the Internet: <URL:http://www.ecrypt.eu.org/stream/papers dir/062.pdf>**

**EP 2 442 482 B1**

**Description**

Field of the invention

The invention relates to encryption techniques, and more particularly, to a method and device for implementing stream cipher.

Background art

Stream cipher is one of the main cryptographic techniques used in military and diplomatic occasions, and its main principle is to use a finite state machine (FSM) to generate a pseudo-random sequence having excellent performance, and to use the pseudo-random sequence to encrypt information flow (bit-by-bit encryption) to obtain a ciphertext sequence. The security strength of the stream cipher technique depends completely on the quality of the pseudo-random sequence generated by the stream cipher technique.
In the existing technology, the methods of generating pseudo-random sequence mainly include:

1. Using n-order nonlinear feedback function to generate nonlinear sequences having large periods and using the nonlinear sequences as required pseudo-random sequence. This method has good cryptography properties, but it is difficult to select an appropriate nonlinear feedback function.

2. Using a linear shift register sequence and a nonlinear feedforward function to generate a feedforward sequence and using the feedforward sequence as required pseudo-random sequence; but it is also very difficult to how to control sequence phase and how to select an appropriate non-linear feed-forward function.

3. Using a register sequence as a clock to control another register sequence (or control their own) to generate a clock control sequence, and using the clock control sequence as required pseudo-random sequence, but the clock control sequence has large linear complexity.

4. Combining use of the above methods, but it is theoretically more difficult to control.

G. Selimis et al., "High performance cryptographic engine PANAMA: hardware implementation", Electronics, circuits and systems, 2004, ICECS 2004, Proceedings of the 2004 11th IEEE International Conference on Tel Aviv, Israel, December 13-15, 2004, pages 575-578, December 13, 2004 discloses a hardware implementation of a dual operation cryptographic engine PANAMA. The implementation of PANAMA algorithm can be used both as a hash function and a stream cipher.

Summary

In view of this, it is a main object of the invention to provide a method for implementing stream cipher, which can be simple and convenient way to obtain the required pseudo-random sequence, and has a high security.
It is another object of the invention to provide a device for implementing stream cipher, which can be simple and convenient way to obtain the required pseudo-random sequence and has a high security.
In order to achieve the above mentioned objects, the technical solution of the invention is implemented as follows:

A method for implementing stream cipher includes:

implementing a key expansion operation with a pre-set 128-bit initial key and 128-bit initial vector, to obtain 16 31-bit state variables and loading 16 state variables into 16 31-bit registers of a linear feedback shift register as initial status words of the 16 31-bit registers;
implementing N-round operations using the state variables, wherein N is a positive integer and in turn each round of operation includes: bit restructuring, nonlinear state filtering operation and variable initialization mode operation of the linear feedback shift register;
processing output results after the N-round operations in turn using bit restructuring, nonlinear state filtering operation and discarding output results, as well as variable work mode operation of the linear feedback shift register;
implementing following steps in each clock tick and respectively in turn: bit restructuring, nonlinear state filtering operation, XOR operation, and variable work mode operations of the linear feedback shift register, to obtain 32-bit pseudo-random sequence.

A device for implementing stream cipher includes:

a key expansion unit used for implementing a key expansion operation with a pre-set 128-bit initial key and 128-bit initial vector to obtain 16 31-bit state variables, and loading the 16 state variables into 16 31-bit registers of a linear feedback shift register unit as initial status words of the 16 31-bit registers, respectively, via a control unit using any method;

the control unit used for implementing N-round operations using the 16 initial status words, wherein N is a positive integer; wherein in each round of operation, the control unit in turn calls a bit restructuring unit, a nonlinear state filtering operation unit and a feedback subunit in the linear feedback shift register unit, to complete bit restructuring, nonlinear state filtering operation and variable initialization mode operation of a linear feedback shift register; after the N-round operations, the control unit in turn calls the bit restructuring unit, the nonlinear state filtering operation unit and the feedback subunit to complete bit restructuring, nonlinear state filtering operation and discarding result of operations, as well as variable work mode operation of the linear feedback shift register; then, in each clock tick, the control unit in turn calls the bit restructuring unit, the nonlinear state filtering operation unit, a key word output unit and the feedback subunit to complete bit restructuring, nonlinear state filtering operation, XOR operation, and variable work mode operation of the linear feedback shift register, to obtain 32-bit pseudo-random sequence;

wherein,

the bit restructuring unit is used for restructuring out 4 32-bit words according to the 16 status words in the linear feedback shift register unit;

the nonlinear state filtering operation unit is used for calculating to obtain result of the nonlinear state filtering operation according to the first three restructured 32-bit words;

the key word output unit is used for implementing XOR operation according to the result of the nonlinear state filtering operation and the forth restructured 32-bit word, to obtain 32-bit pseudo-random sequence output;

the feedback subunit is used for updating the status words in the 16 31-bit registers.

In comparison with the existing techniques, the solution of the invention can be simply and conveniently implemented and has a high security.

Brief description of the drawings

Exemplary embodiments of the invention are hereinafter described in details with reference to drawings, so that those skilled in the art can further understand the above and other characteristics and advantages of the invention, in the drawing:

Fig. 1 is a flow chart of an embodiment of a method of the invention;

Fig. 2 is a schematic structure view of an embodiment of a device of the invention.

Detailed description of examples

In order to solve the problems existed in the existing techniques, the present invention provides a new solution of implementing stream cipher, which mainly includes three layer logical structure: linear feedback shift Register (LFSR), bit restructuring and nonlinear state filtering operation.

In order to make objects, technical solutions and advantages of the invention clear, the implementation of the solution of the present invention is hereinafter further explained in details with reference to embodiments.

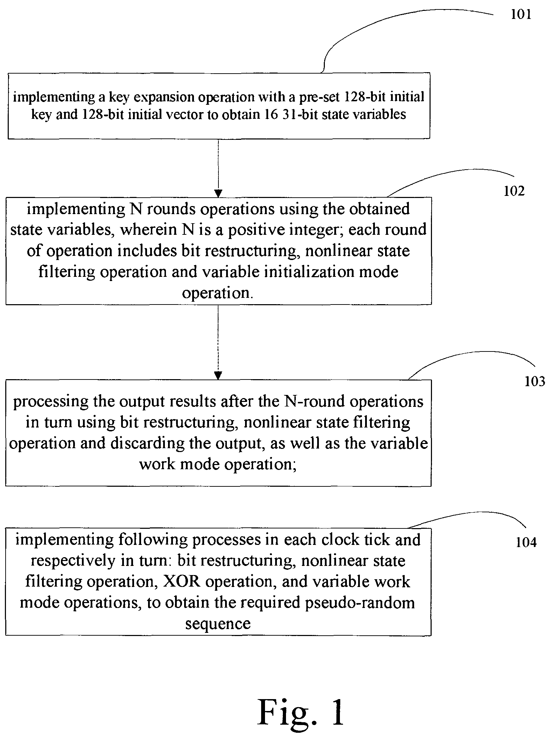

Fig. 1 is a flow chart of an embodiment of a method of the invention. As shown in Fig. 1, the method includes the following steps:

Step 101: implementing a key expansion operation with a pre-set 128-bit initial key and 128-bit initial vector to obtain 16 31-bit state variables.

In this step, the pre-set initial key k and the pre-set initial vector iv are respectively divided into 16 character strings each having a length of 8 bits, i.e., k[0], k[1], k[2], ... , k[15] and iv[0], iv[1], iv[2], ... , iv[15]. The concrete values of the initial key k and the initial vector iv can be determined according to the actual requirements.

Meanwhile, a bit string D having a length of 240 bits is taken, and the concrete values of the bit string D can also be determined according to the actual requirements. The bit string D is divided into 16 character strings each having a length of 15 bits, i.e., D=d[0]‖d[1]‖...‖d[15], ‖ represents connection, and it is required that 0 and 1 in each character string should be distributed as uniform as possible.

In this embodiment, it is supposed that d[0] to d[15] can respectively be:

$$d[0] = 100010011010111_2 ,$$

$$d[1] = 010011010111100_2 ,$$

$$d[2] = 110001001101011_2 ,$$

$$d[3] = 001001101011110_2 ,$$

$$d[4] = 101011110001001_2 ,$$

$$d[5] = 011010111100010_2 ,$$

$$d[6] = 111000100110101_2 ,$$

$$d[7] = 000100110101111_2 ,$$

$$d[8] = 100110101111000_2 ,$$

$$d[9] = 010111100010011_2 ,$$

$$d[10] = 110101111000100_2 ,$$

$$d[11] = 001101011110001_2 ,$$

$$d[12] = 101111000100110_2 ,$$

$$d[13] = 011110001001101_2 ,$$

$$d[14] = 111100010011010_2 ,$$

$$d[15] = 100011110101100_2 ;$$

The above subscript 2 represents binary system.

According to the results of the above division, 16 31-bit state variables can be obtained through calculation, i.e., $s_i=k[i]\|d[i]\|iv[i]$, the values of i can be from 0 to 15. Values of from $s_0$ to $s_{15}$ can be in the set $\{1,2,3,..., 2^{31}\text{-}1\}$.

Step 102: implementing N rounds operations using the obtained state variables, wherein N is a positive integer (it is supposed that N can be 32 in this embodiment); each round of operation includes bit restructuring, nonlinear state filtering operation and variable initialization mode operation.

The implementation of the solution of the present invention mainly includes two phases: initialization phase and working phase. This step corresponds to the initialization phase, and the subsequent steps 103 and 104 correspond to the working phase. In the initialization phase, it is needed to repeat execution of the following processes 32 times:

□Bit restructuring BitRecombine ();

Nonlinear state filtering operation F;

Variable initialization mode operation LFSRWithInitialisationMode (W»1).

The function of bit restructuring is to restructure the status word of an upper layer LFSR into 32-bit word to be called by a lower layer. Specifically, 8 of the 16 state variables, i.e., $s_0$, $s_2$, $s_5$, $s_7$, $s_8$, $s_{12}$, $s_{14}$ and $s_{15}$, are selected, and the following operations is performed:

$$X_0=s_{15H}\|s_{14L}, \quad X_1=s_{12L}\|s_{8H}, \quad X_2=s_{7H}\|s_{5L}, \quad X_3=s_{2L}\|s_{0H};$$

H represents selecting the left 16-bit character string (for example, $s_{15H}$ represents the leftmost 16 bits of the 31 bits corresponding to the state variable $S_{15}$), L represents selecting the right 16-bit character string, $X_0$, $X_1$, $X_2$ and $X_3$ represent the results of the bit restructuring, i.e., 4 32-bit words.

The nonlinear state filtering operation has two 32-bit registers $R_1$ and $R_2$, of which the initial status words can be set to all 0's and can be updated through. The $X_0$, $X_1$ and $X_2$ can be used as input of the nonlinear state filtering operation, and W can be used as output of the nonlinear state filtering operation, then, there is:

$$W=X_0 \oplus R_1 \boxplus R_2;$$

$$W_1=R_1 \boxplus X_1, \quad W_2=R_2 \oplus X_2, \quad R_1=S(L_1(W_{1L}\|W_{2H})), \quad R_2=S(L_2(W_{2L}\|W_{1H}));$$

$\oplus$ represents bitwise XOR operation, $\boxplus$ represents modulo $2^{32}$ addition operation.

S represents S-box transformation which is made up of four 8*8 S-boxes; $L_1$ and $L_2$ represent linear transformation, H represents selecting the left 16-bit character string, L represents selecting the right 16-bit character string, and $\|$ represents connection.

For each S-box, let input $X = x_0\|x_1\|x_2\|x_3$, let $Y = y_0\|y_1\|y_2\|y_3$, then there is:

$$y_i=S_i(x_i),i=0,1,2,3.$$

In the four 8*8 S-boxes, i.e., $S_0$, $S_1$, $S_2$ and $S_3$, $S_0=S_2$, $S_1=S_3$; $S_0$ canbe:

$S_0[256]=\{$ 0x3e,0x72,0x5b,0x47,0xca,0xe0,0x00,0x33,0x04,0xd1,0x54,0x98,0x09,0xb9,0x6d,
0xcb;0x7b,0x1b,0xf9,0x32,0xaf,0x9d,0x6a,0xa5,0xb8,0x2d,0xfc,0x1d,0x08,0x53,0
x03,0x90;0x4d,0x4e,0x84,0x99,0xe4,0xce,0xd9,0x91,0xdd,0xb6,0x85,0x48,0x8b,0
x29,0x6e,0xac;0xcd,0xc1,0xf8,0x1e,0x73,0x43,0x69,0xc6,0xb5,0xbd,0xfd,0x39,0x
63,0x20,0xd4,0x38;0x76,0x7d,0xb2,0xa7,0xcf,0xed,0x57,0xc5,0xf3,0x2c,0xbb,0x1
4,0x21,0x06,0x55,0x9b;0xe3,0xef,0x5e,0x31,0x4f,0x7f,0x5a,0xa4,0x0d,0x82,0x51,
0x49,0x5f,0xba,0x58,0x1c;0x4a,0x16,0xd5,0x17,0xa8,0x92,0x24,0x1f,0x8c,0xff,0x d8,0xae,0x2e,0x01,0xd3,0xad;0x3b,0x4b,0xda,0x46,0xeb,0xc9,0xde,0x9a,0x8f,0x8 7,0xd7,0x3a,0x80,0x6f,0x2f,0xc8;0xb1,0xb4,0x37,0xf7,0x0a,0x22,0x13,0x28,0x7c, 0xcc,0x3c,0x89,0xc7,0xc3,0x96,0x56;0x07,0xbf,0x7e,0xf0,0x0b,0x2b,0x97,0x52,0 x35,0x41,0x79,0x61,0xa6,0x4c,0x10,0xfe;0xbc,0x26,0x95,0x88,0x8a,0xb0,0xa3,0x fb,0xc0,0x18,0x94,0xf2,0xel;0xe5,0xe9,0x5d;0xd0,0xdc,0x11,0x66,0x64,0x5c,0xe c,0x59,0x42,0x75,0x12,0xf5,0x74,0x9c,0xaa,0x23;0x0e,0x86,0xab,0xbe,0x2a,0x02, 0xe7,0x67,0xe6,0x44,0xa2,0x6c,0xc2,0x93,0x9f,0xf1;0xf6,0xfa,0x36,0xd2,0x50,0x 68,0x9e,0x62,0x71,0x15,0x3d,0xd6,0x40,0xc4,0xe2,0x0f;0x8e,0x83,0x77,0x6b,0x2 5,0x05,0x3f,0x0c,0x30,0xea,0x70,x0b7,0xa1,0xc8,0xa9,0x65;0x8d,0x27,0x1a,0xdb ,0x81,0xb3,0xa0,0xf4,0x45,0 x7a,0x19,0xdf,0xee,0x78,0x34,0x60};

$S_1$ can be:

$S_1[256]=\{$ 0x63,0x7c,0x77,0x7b,0xf2,0x6b,0x6f,0xc5,0x30,0x01,0x67,0x2b,0xfe,0xd7,0xab,0 x76;0xca,0x82,0xc9,0x7d,0xfa,0x59,0x47,0xf0,0xad,0xd4,0xa2,0xaf,0x9c,0xa4,0x7 2,0xc0;0xb7,0xfd,0x93,0x26,0x36,0x3f,0xf7,0xcc,0x34,0xa5,0xe5,0xfl,0x71,0xd8, 0x31,0x15;0x04,0xc7,0x23,0xc3,0x18,0x96,0x05,0x9a,0x07,0x12,0x80,0xe2,0xeb, 0x27,0xb2,0x75;0x09,0x83,0x2c,0x1a,0xtb,0x6e,0x5a,0xa0,0x52,,0x3b,0xd6,0xb3, 0x29,0xe3,0x2f,0x84;0x53,0xd1,0x00,0xed,0x20,0xfc,0xb1,0x5b,0x6a,0xcb,0xbe,0 x39,0x4a,0x4c,0x58,0xcf;0xd0,0xef,0xaa,0xfb,0x43,0x4d,0x33,0x85,0x45,0xf9,0x0 2,0x7f,0x50,0x3c,0x9f,0xa8;0x51,0xa3,0x40,0x8f,0x92,0x9d,0x38,0xf5,0xbc,0xb6, 0xda,0x21,0xl0,0xff,0xf3,0xd2;0xcd,0x0c,0x13,0xec,0x5f,0x97,0x44,0x17,0xc4,0x a7,0x7e,0x3d,0x64,0x5d,0x19,0x73;0x60,0x81,0x4f,0xdc,0x22,0x2a,0x90,0x88,0x4 6,0xee,0xb8,0x14,0xde,0x5e,0x0b,0xdb;0xe0,0x32,0x3a,0x0a,0x49,0x06,0x24,0x5c ,0xc2,0xd3,0xac,0x62,0 x91,0x95,0xe4,0x79;0xe7,0xc8,0x37,0x6d,0x8d,0xd5,0x4e, 0xa9,0x6c,0x56,0xf4,0xea,0x65,0x7a,0xae,0x08;0xba,0x78,0x25,0x2e,0x1c,0xa6,0 xb4,0xc6,0xe8,0xdd,0x74,0x1f,0x4b,0xbd,0x8b,0x8a;0x70,0x3e,0xb5,0x66,0x48,0x 03,0xf6,0x0e,0x61,0x35,0x57,0xb9,0x86,0xcl,0xld,0x9e;0xe1,0xf8,0x98,0x11,0x69 ,0xd9,0x8e,0x94,0x9b,0x 1e,0x87,0xe9,0xce,0x55,0x28,0xdf;0x8c,0xa1,0x89,0x0d, 0xbf,0xe6,0x42,0x68,0x41,0x99,0x2d,0x0f,0xb0,0x54,0xbb,0x16}.

In fact, $S_1$ is the S-box of the AES.

The linear transformations $L_1$ and $L_2$ can be:

$$L_1(X) = X \oplus (X <<< 2) \oplus (X <<< 10) \oplus (X <<< 18) \oplus (X <<< 24);$$

$$L_2(X) = X \oplus (X <<< 8) \oplus (X <<< 14) \oplus (X <<< 22) \oplus (X <<< 30);$$

Wherein <<< represents rotate left, $\oplus$ represents bitwise XOR operation.

Further, LFSR includes two modes of operations: initialization mode and work mode. In the initialization mode, the variable initialization mode operation will be performed:

1. u=W»1, W represents the result of the nonlinear state filtering operation, W»1 represents discarding the rightmost 1 bit of the W;

2. $v=[2^{15}s_{15}+2^{17}s_{13}+2^{21}s_{10}+2^{20}s_4+(1+2^8)s_0]\bmod(2^{31}-1)$, mod represents integer complementation;

3. $s_{16}=v\oplus u$, $\oplus$ represents bitwise XOR operation;

4. determining whether the value of $s_{16}$ is 0; if yes, making $s_{16}=2^{31}-1$; otherwise, maintaining the original value of $s_{16}$ unchanged;

5. $(s_1,s_2,...,s_{15},s_{16})\rightarrow(s_0,s_1,...,s_{14},s_{15})$; $\rightarrow$ represents value assignment; from $s_0$ to $s_{15}$ represent 16 state variables.

Step 103: processing the output results after the N-round operations in turn using bit restructuring, nonlinear state filtering operation and discarding the output, as well as the variable work mode operation;

After the initialization phase of step 102, this step begins to enter the working phase. In the working phase, the following process is first executed once, and the result of the nonlinear state filtering operation is discarded.

Bit restructuring BitRecombine ();

Nonlinear state filtering operation F;

Variable work mode operation LFSRWithWorkMode ().

The implements of the bit restructuring and the nonlinear state filtering operation are the same as those described in step 102, and are not repeated here.

The variable work mode operation corresponds to work mode operation of LFSR, and the implementation of the variable work mode operation includes:

1. $s_{16}=[2^{15}s_{15}+2^{17}s_{13}+2^{21}s_{10}+2^{20}s_4+(1+2^8)s_0]\mod(2^{31}\text{-}1)$, mod represents integer complementation;

2. $(s_1,s_2,...,s_{15},s_{16}) \rightarrow (s_0,s_1,...,s_{14},s_5)$, $\rightarrow$ represents value assignment; from $s_0$ to $s_{15}$ represent 16 state variables.

Step 104: implementing the following processes in each clock tick and respectively in turn: bit restructuring, nonlinear state filtering operation, XOR operation, and variable work mode operations, to obtain the required pseudo-random sequence.

In this step, in each clock tick, the following processes are respectively executed once and a 32-bit pseudo-random sequence Z is output:

Bit restructuring BitRecombine ();

$$\text{XOR operation} \quad Z=W \oplus X_3;$$

Variable work mode operation LFSRWithWorkMode ().

The implements of the bit restructuring and the variable work mode operation are the same as those described in steps 102 and 103, and are not repeated here. Further, $X_3$ used in the XOR operation represents the last 32-bit word after bit restructuring. It can be seen that the required pseudo-random sequence for the present clock tick has actually been obtained after the XOR operation, the reasons why the subsequent variable work mode operation is still performed, is because it is needed to update the state variables from $S_0$ to $S_{15}$ in order to complete the calculation in the next clock tick.

The following is one test case of the solution of the present invention:

Assuming the initial key is:

0x47 0x31 0x6B 0x07 0x0F 0x7E 0x07 0x72 0x3F 0x7E 0x23 0x64 0x50 0x71 0x45 0x39;

The initial vector is:

0xF0 0xE9 0x32 0xAD 0x66 0x31 0x9C 0xE4 0xA4 0x0A 0x9B 0x8C 0xFE 0x47 0x43 0xB9;

The state variables $S_0$ to $S_{15}$ (initial status word of each register of the LFSR, i.e., initial state):

0x23C4D7F0 0x18A6BCE9 0x35B26B32 0x03935EAD;

0x07D78966 0x3F35E231 0x03F1359C 0x3909AFE4;

0x1FCD78A4 0x3F2F130A 0x11BBC49B 0x321AF18C;

0x285E26FE 0x38BC4D47 0x22F89A43 0x1CC7ACB9;

The 4 32-bit words X0, X1, X2 and X3 obtained after bit restructuring can be:

0x398F9A43 0x26FE3F9A0x7213E231 0x6B324789;

The values of the output results W obtained through one round of nonlinear state filtering operation after bit restructuring and the 32-bit registers $R_1$ and $R_2$ can be:

0xE454DEF9 0x1B0FAF8C 0x6E9EA525;

The generated pseudo-random sequence (within the first 32 lock ticks) can be:

0xADEBFOAB 0x7B3DC49F 0x90059ADE 0xD7A96B82

0xF67DCABE 0x1F2E7594 0x58C506BC 0x650244A2

0x1B542BF1 0x3E8DB2B1 0xF4FB22C7 0xFF20501

0xA9D12EE7 0x2391C58A 0x439DC8DA 0x315EC761

0x9F193A6B 0x3A0AD321 0x0A593603 0x6B4EE530

0x3D7924B0 0xEA34E314 0x9E75782C 0x9B81B55B

0x84403374 0xEEE931C5 0xA337438F 0x71C2C095

0xE120D131 0xD5059C37 0x267EAE1C 0xCF672153.

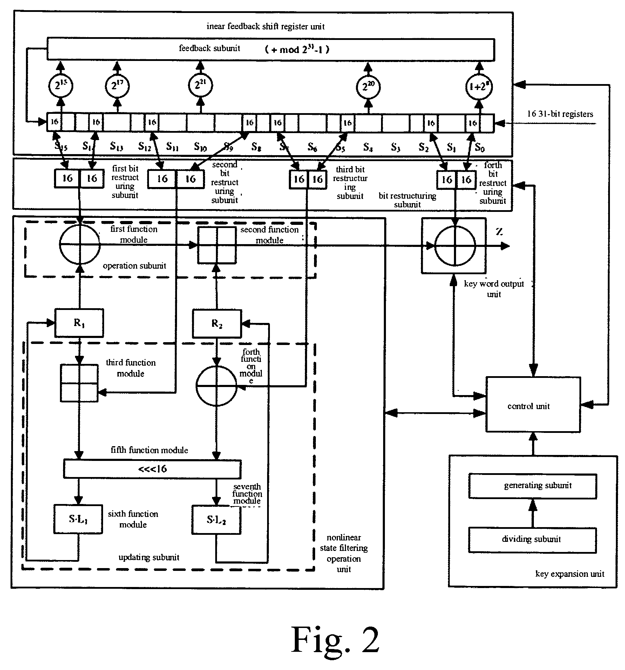

Based on the above description, Fig. 2 is a schematic structure view of an embodiment of a device of the invention. As shown in Fig. 2, the device includes:

a key expansion unit used for implementing a key expansion operation with a pre-set 128-bit initial key and 128-bit initial vector to obtain 16 31-bit state variables, and loading the 16 state variables into the 16 31-bit registers of a linear feedback shift register unit as initial status words of the 16 31-bit registers, respectively, via a control unit using any method such as shift or direct value assignment;

the control unit used for implementing N-round operations using the 16 initial status words, wherein N is a positive integer; wherein in each round of operation, the control unit in turn calls a bit restructuring unit, a nonlinear state filtering operation unit and a feedback subunit in the linear feedback shift register unit, to complete bit restructuring, nonlinear state filtering operation and variable initialization mode operation; after the N-round operations, the control unit in turn calls bit restructuring unit, the nonlinear state filtering operation unit and the feedback subunit to complete bit restructuring, nonlinear state filtering operation and discarding the result of operations, as well as the variable work mode operation; then, in each clock tick, the control unit in turn calls the bit restructuring unit, the nonlinear state filtering operation unit, a key word output unit and the feedback subunit to complete bit restructuring, nonlinear state filtering operation, XOR operation, and variable work mode operation, to obtain 32-bit pseudo-random sequence;

wherein

the bit restructuring unit is used for restructuring out 4 32-bit words according to the 16 status words in the linear feedback shift register unit;

the nonlinear state filtering operation unit is used for calculating to obtain the results of the nonlinear state filtering operation according to the first three restructured 32-bit words;

the key word output unit is used for implementing XOR operation according to the results of the nonlinear state filtering operation and the forth restructured 32-bit word, to obtain 32-bit pseudo-random sequence output;

the feedback subunit is used for updating the status words in the 16 registers.

Wherein the key expansion unit includes:

a dividing subunit used for dividing a bit string D having a pre-set length of 240 bits into 16 character strings each having a length of 15 bits, i.e., D=d[0]‖d[1]‖...‖[15], ‖ represents connection, and dividing a pre-set initial key k and a pre-set initial vector iv into 16 character strings each having a length of 8 bits, respectively, i.e.,

$$k=k[0]\|k[1]\|...\|k[15]; \quad iv=iv[0]\|iv[1]\|...\|iv[15];$$

a generating subunit used for generating 16 31-bit state variables, i.e., $s_i$=k[i]‖d[i]‖iv[i], the values of i can be from 0 to 15.

For the feedback subunit, when the linear feedback shift register unit runs in the initialization mode, the feedback subunit is used for performing variable initialization mode operation, including:

discarding the lowest 1-bit of the result of the nonlinear state filtering operation, to obtain the result u;

calculating the result v of $[2^{15}s_{15}+2^{17}s_{13}+2^{21}s_{10}+2^{20}s_4+(1+2^8)s_0]\mathrm{mod}(2^{31}-1)$, wherein mod represents integer complementation;

calculating the XOR result $s_{16}$ of v and u;

determining whether the value of $s_{16}$ is 0; if yes, making $s_{16}=2^{31}-1$; otherwise, maintaining the original value of $s_{16}$ unchanged;

updating the status words of the 16 31-bit registers: $(s_1,s_2,...,s_{15},s_{16}) \rightarrow (s_0,s_1,...,s_{14},s_{15})$; $\rightarrow$ represents value assignment;

When the linear feedback shift register unit runs in the work mode, the feedback subunit is used for performing variable work mode operation, including:

calculating the result $s_{16}$ of $[2^{15}s_{15}+2^{17}s_{13}+2^{21}s_{10}+2^{20}s_4+(1+2^8)s_0]\mathrm{mod}(2^{31}-1)$, mod represents integer complementation;

updating the status words of the 16 31-bit registers: $(s_1,s_2,...,s_{15},s_{16}) \rightarrow (s_0,s_1,...,s_{14},s_{15})$; $\rightarrow$ represents value assignment;

The above 16 31-bit registers can be general registers or memory units.
Further, the bit restructuring unit can specifically include:

a first bit restructuring subunit used for selecting the left 16-bit character string in the status word of the sixteenth register and the right 16-bit character string in the status word of the fifteenth register, and outputting to the nonlinear state filtering operation unit after connection;

a second bit restructuring subunit used for selecting the right 16-bit character string in the status word of the thirteenth register and the left 16-bit character string in the status word of the ninth register, and outputting to the nonlinear state filtering operation unit after connection;

a third bit restructuring subunit used for selecting the left 16-bit character string in the status word of the eighth register and the right 16-bit character string in the status word of the sixth register, and outputting to the nonlinear state filtering operation unit after connection;

a forth bit restructuring subunit used for selecting the right 16-bit character string in the status word of the third register and the left 16-bit character string in the status word of the first register, and outputting to the nonlinear state filtering operation unit after connection.

The nonlinear state filtering operation unit can specifically include:

two 32-bit registers $R_1$ and $R_2$, of which the initial status words can be set to all 0's;

an operation subunit used for calculating to obtain the results of the nonlinear state filtering operation according to the data output from the first bit restructuring subunit and the status words of the 32-bit registers $R_1$ and $R_2$;

an updating subunit used for updating the status words of the 32-bit registers $R_1$ and $R_2$ according to the data output from the second and third bit restructuring subunits.

The operation subunit can further include:

a first function module used for receiving two way data coming from the first bit restructuring subunit and the 32-bit register $R_1$, performing XOR operation with the two way data and outputting the result to a second function module;

the second function module used for receiving two way data coming from the first function module and the 32-bit register $R_2$, performing modulo $2^{32}$ addition operation with the two way data and outputting the result to the key word output unit.

The updating subunit can further include:

a third function module used for receiving two way data coming from the second bit restructuring subunit and the 32-bit register $R_1$, performing modulo $2^{32}$ addition operation with the two way data and outputting the result to a fifth function module;

a forth function module used for receiving two way data coming from the third bit restructuring subunit and the 32-bit register $R_2$, performing XOR operation with the two way data and outputting the result to the fifth function module;

the fifth function module used for receiving the data $W_1$ coming from the third function module and the data $W_2$ coming from the forth function module, selecting and connecting the right 16-bit character string of $W_1$ and the left 16-bit character string of $W_2$, and then outputting the result to a sixth function module; the fifth function module also used for selecting and connecting the right 16-bit character string of $W_2$ and the left 16-bit character string of $W_1$, and then outputting the result to a seventh function module;

the sixth function module used for receiving the data coming from the fifth function module and performing the following operations with the data:

performing linear transformation $L_1$ on 32-bit words of the data;

taking the result of the linear transformation $L_1$ as an input and performing S-box transformation;

outputting the result of the S-box transformation to the 32-bit register $R_1$;

the seventh function module used for receiving the data coming from the fifth function module and performing the following operations with the data:

performing linear transformation $L_2$ on 32-bit words of the data;

taking the result of the linear transformation $L_2$ as an input and performing S-box transformation;

outputting the result of the S-box transformation to the 32-bit register $R_2$;

The linear transformations $L_1$ and $L_2$ can be:

$$L_1(X) = X \oplus (X <<< 2) \oplus (X <<< 10) \oplus (X <<< 18) \oplus (X <<< 24);$$

$$L_2(X) = X \oplus (X <<< 8) \oplus (X <<< 14) \oplus (X <<< 22) \oplus (X <<< 30);$$

Wherein <<< represents rotate left, $\oplus$ represents bitwise XOR operation.

The S-box transformation is made up of four 8*8 S-boxes, i.e., $S_0$, $S_1$, $S_2$ and $S_3$, $S_0=S_2$, $S_1=S_3$; $S_0$ can be:

$S_0[256]=\{$ 0x3e,0x72,0x5b,0x47,0xca,0xe0,0x00,0x33,0x04,0xd1,0x54,0x98,0x09,0xb9,0x6d,
0xcb;0x7b,0x1b,0xf9,0x32,0xaf,0x9d,0x6a,0xa5,0xb8,0x2d,0xfc,0x1d,0x08,0x53,0
x03,0x90;0x4d,0x4e,0x84,0x99,0xe4,0xce,0xd9,0x91,0xdd,0xb6,0x85,0x48,0x8b,0
x29,0x6e,0xac;0xcd,0xc1,0xf18,0x1e,0x73,0x43,0x69,0xc6,0xb5,0xbd,0xfd,0x39,0x
63,0x20,0xd4,0x38;0x76,0x7d,0xb2,0xa7,0xcf,0xed,0x57,0xc5,0xf3,0x2c,0xbb,0x1
4,0x21,0x06,0x55,0x9b;0xe3,0xef,0x5e,0x31,0x4f,0x7f,0x5a,0xa4,0x0d,0x82,0x51,
0x49,0x5f,0xba,0x58,0x1c;0x4a,0x16,0xd5,0x17,0xa8,0x92,0x24,0x11f,0xBc,0xff,0x
d8,0xae,0x2e,0x01,0xd3,0xad;0x3b,0x4b,0xda,0x46,0xeb,0xc9,0xde,0x9a,0x8f,0x8
7,0xd7,0x3a,0x80,0x6f,0x2f,0xc8;0xb1,0xb4,0x37,0xf7,0x0a,0x22,0x13,0x28,0x7c,
0xcc,0x3c,0x89,0xc7,0xc3,0x96,0x56;0x07,0xbf,0x7e,0xf0,0x0b,0x2b,0x97,0x52,0
x35,0x41,0x79,0x61,0xa6,0x4c,0x10,0xfe;0xbc,0x26,0x95,0x88,0x8a,0xb0,0xa3,0x
fb,0xc0,0x18,0x94,0xf2,0xe1,0xe5,0xe9,0x5d;0xd0,0xdc,0x11,0x66,0x64,0x5c,0xe
c,0x59,0x42,0x75,0x12,0xf5,0x74,0x9c,0xaa,0x23;0x0e,0x86,0xab,0xbe,0x2a,0x02,
0xe7,0x67,0xe6,0x44,0xa2,0x6c,0xc2,0x93,0x9f,0xf1;0xf6,0xfa,0x36,0xd2,0x50,0x
68,0x9e,0x62,0x71,0x15,0x3d,0xd6,0x40,0xc4,0xe2,0x0f;0x8e,0x83,0x77,0x6b,0x2
5,0x05,0x3f,0x0c,0x30,0xea,0x70,x0b7,0xa1,0xe8,0xa9,0x65;0x8d,0x27,0x1a,0xdb ,0x81,0xb3,0xa0,0xf4,0x45,0
x7a,0x19,0xdf,0xee,0x78,0x34,0x60\};

$S_1$ can be:

$S_1[256]=\{$ 0x63,0x7c,0x77,0x7b,0xf2,0x6b,0x6f,0xc5,0x30,0x01,0x67,0x2b,0xfe,0xd7,0xab,0
x76;0xca,0x82,0xc9,0x7d,0xfa,0x59,0x47,0xf0,0xad,0xd4,0xa2,0xaf,0x9c,0xa4,0x7
2,0xc0;0xb7,0xfd,0x93,0x26,0x36,0x3f,0xf7,0xcc,0x34,0xa5,0xe5,0xf1,0x71,0xd8,
0x31,0x15;0x04,0xc7,0x23,0xc3,0x18,0x96,0x05,0x9a,0x07,0x12,0x80,0xe2,0xeb,
0x27,0xb2,0x75;0x09,0x83,0x2c,0x1a,0x1b,0x6e,0x5a,0xa0,0x52,,0x3b,0xd6,0xb3,
0x29,0xe3,0x2f,0x84;0x53,0xd1,0x00,0xed,0x20,0xfc,0xb1,0x5b,0x6a,0xcb,0xbe,0
x39,0x4a,0x4c,0x58,0xcf;0xd0,0xef,0xaa,0xfb,0x43,0x4d,0x33,0x85,0x45,0xf9,0x0
2,0x7f,0x50,0x3c,0x9f,0xa8;0x51,0xa3,0x40,0x8f,0x92,0x9d,0x38,0xf5,0xbc,0xb6,
0xda,0x21,0x10,0xff,0xf3,0xd2;0xcd,0x0c,0x13,0xec,0x5f,0x97,0x44,0x17,0xc4,0x
a7,0x7e,0x3d,0x64,0x5d,0x19,0x73;0x60,0x81,0x4f,0xdc,0x22,0x2a,0x90,0x88,0x4
6,0xee,0xb8,0x14,0xde,0x5e,0x0b,0xdb;0xe0,0x32,0x3a,0x0a,0x49,0x06,0x24,0x5c ,0xc2,0xd3,0xac,0x62,0
x91,0x95,0xe4,0x79;0xe7,0xc8,0x37,0x6d,0x8d,0xd5,0x4e,
0xa9,0x6c,0x56,0xf4,0xea,0x65,0x7a,0xae,0x08;0xba,0x78,0x25,0x2e,0x1c,0xa6,0
xb4,0xc6,0xe8,0xdd,0x74,0x1f,0x4b,0xbd,0x8b,0x8a;0x70,0x3e,0xb5,0x66,0x48,0x
03,0xf6,0x0e,0x61,0x35,0x57,0xb9,0x86,0xc1,0x1d,0x9e;0xel,0xf8,0x98,0x11,0x69 ,0xd9,0x8e,0x94,0x9b,0x
1e,0x87,0xe9,0xce,0x55,0x28,0xdf;0x8c,0xa1,0x89,0x0d,
0xbf,0xe6,0x42,0x68,0x41,0x99,0x2d,0x0f,0xb0,0x54,0xbb,0x16\}.

In the actual applications, the value of N is usually 32.

The specific work process of the device shown in Fig. 2 refers to the corresponding description of the embodiment of the method shown in Fig. 1, and is not repeated here.

The foregoing are only preferred embodiments of the invention and are not for use in limiting the protection scope thereof.

**Claims**

1. A method for implementing stream cipher, **characterized by** comprising:

   implementing a key expansion operation with a pre-set 128-bit initial key and 128-bit initial vector, to obtain 16 31-bit state variables (101) and loading 16 state variables into 16 31-bit registers of a linear feedback shift register as initial status words of the 16 31-bit registers;
   implementing N-round operations using the state variables, wherein N is a positive integer and in turn each round of operation includes: bit restructuring, nonlinear state filtering operation and variable initialization mode operation of the linear feedback shift register (102);
   processing output results after the N-round operations in turn using bit restructuring, nonlinear state filtering operation and discarding output results, as well as variable work mode operation of the linear feedback shift register (103);

implementing following steps in each clock tick and respectively in turn: bit restructuring, nonlinear state filtering operation, XOR operation, and variable work mode operations of the linear feedback shift register, to obtain 32-bit pseudo-random sequence (104).

2. The method of claim 1, wherein the key expansion operation includes:

dividing a bit string D having a pre-set length of 240 bits into 16 character strings each having a length of 15 bits: D=d[0]‖d[1]‖...‖d[15], ‖ represents connection;

dividing the initial key k and vector iv into 16 character strings each having a length of 8 bits: k=k[0]‖k[1]‖...‖k[15], iv=iv[0]‖iv[1]‖...‖iv[15]; $s_i$=k[i]‖d[i]‖iv[i], wherein the $s_i$ represent state variables, and the values of i are from 0 to 15.

3. The method of claim 1, wherein the nonlinear state filtering operation includes:

$$W = X_0 \oplus R_1 \boxplus R_2 ;$$

wherein W represents output of the nonlinear state filtering operation; $X_0$ represents the first 32-bit word restructured by the bit restructuring; $\oplus$ represents bitwise XOR operation; $\boxplus$ represents modulo $2^{32}$ addition operation;

$$W_1 = R_1 \boxplus X_1 , \quad W_2 = R_2 \oplus X_2 , \quad R_1 = S(L_1(W_{1L} \| W_{2H})) ;$$

wherein $X_1$ and $X_2$ represent the second and third 32-bit words restructured by the bit restructuring; $R_1$ and $R_2$ represent two 32-bit registers, of which initial status words are set to all 0's; S represents S-box transformation which is made up of four 8*8 S-boxes; $L_1$ and $L_2$ represent linear transformation; H represents selecting left 16-bit character string; L represents selecting right 16-bit character string; and ‖ represents connection.

4. The method of claim 3, wherein the linear transformations $L_1$ and $L_2$ are:

$$L_1(X) = X \oplus (X <<< 2) \oplus (X <<< 10) \oplus (X <<< 18) \oplus (X <<< 24),$$

$$L_2(X) = X \oplus (X <<< 8) \oplus (X <<< 14) \oplus (X <<< 22) \oplus (X <<< 30) ;$$

wherein <<< represents rotate left, $\oplus$ represents bitwise XOR operation.

5. The method of claim 1, wherein the XOR operation includes:

$$Z = W \oplus X_3 ;$$

wherein Z represents result of the XOR operation; W represents result of the nonlinear state filtering operation; $X_3$ represents the forth 32-bit word restructured by the bit restructuring.

6. The method of claim 1, wherein the variable work mode operation of the linear feedback shift register includes:

$s_{16}$=[$2^{15}s_{15}$+$2^{17}s_{13}$+$2^{21}s_{10}$+$2^{20}s_4$+$(1+2^8)s_0$]mod($2^{31}$-1), wherein mod represents integer complementation; $(s_1,s_2,...,s_{15},s_{16}) \to (s_0,s_1,...,s_{14},s_{15})$; wherein $\to$ represents value assignment; from $s_0$ to $s_{15}$ represent 16 state variables.

7. The method of any one of claims 1-6, wherein value of N is 32.

8. A device for implementing stream cipher, **characterized by** comprising:

a key expansion unit used for implementing a key expansion operation with a pre-set 128-bit initial key and 128-bit initial vector to obtain 16 31-bit state variables, and loading the 16 state variables into 16 31-bit registers of a linear feedback shift register unit as initial status words of the 16 31-bit registers, respectively, via a control unit using any method;

the control unit used for implementing N-round operations using the 16 initial status words, wherein N is a positive integer; wherein in each round of operation, the control unit in turn calls a bit restructuring unit, a nonlinear state filtering operation unit and a feedback subunit in the linear feedback shift register unit, to complete bit restructuring, nonlinear state filtering operation and variable initialization mode operation of a linear feedback shift register; after the N-round operations, the control unit in turn calls the bit restructuring unit, the nonlinear state filtering operation unit and the feedback subunit to complete bit restructuring, nonlinear state filtering operation and discarding result of operations, as well as variable work mode operation of the linear feedback shift register; then, in each clock tick, the control unit in turn calls the bit restructuring unit, the nonlinear state filtering operation unit, a key word output unit and the feedback subunit to complete bit restructuring, nonlinear state filtering operation, XOR operation, and variable work mode operation of the linear feedback shift register, to obtain 32-bit pseudo-random sequence;

wherein,

the bit restructuring unit is used for restructuring out 4 32-bit words according to the 16 status words in the linear feedback shift register unit;

the nonlinear state filtering operation unit is used for calculating to obtain result of the nonlinear state filtering operation according to the first three restructured 32-bit words;

the key word output unit is used for implementing XOR operation according to the result of the nonlinear state filtering operation and the forth restructured 32-bit word, to obtain 32-bit pseudo-random sequence output;

the feedback subunit is used for updating the status words in the 16 31-bit registers.

9. The device of claim 8, wherein the key expansion unit includes:

a dividing subunit used for dividing a bit string D having a pre-set length of 240 bits into 16 character strings each having a length of 15 bits: D=d[0]‖d[1]‖...‖d[15], ‖ represents connection, and dividing the initial key k and initial vector iv into 16 character strings each having a length of 8 bits, respectively: k=k[0]‖k[1]‖...‖k[15]; iv=iv[0]‖iv[1]‖...‖iv[15];

a generating subunit used for generating 16 31-bit state variables: $s_i$=k[i]‖d[i]‖iv[i], wherein values of i are from 0 to 15.

10. The device of claim 8, wherein the any method includes: shift or direct value assignment.

11. The device of claim 8, wherein when the linear feedback shift register unit runs in the initialization mode, the feedback subunit is used for performing variable initialization mode operation of the linear feedback shift register, including:

discarding the lowest 1-bit of the result of the nonlinear state filtering operation, to obtain result u;

calculating result v of $[2^{15}s_{15}+2^{17}s_{13}+2^{21}s_{10}+2^{20}s_4+(1+2^8)s_0]\mod(2^{31}-1)$, wherein mod represents integer complementation;

calculating XOR result $s_{16}$ of v and u;

determining whether value of $S_{16}$ is 0; if yes, making $s_{16}=2^{31}-1$; otherwise, maintaining original value of $s_{16}$ unchanged;

updating the status words of the 16 31-bit registers: $(s_1,s_2,...,s_{15},s_{16}) \rightarrow (s_0,s_1,...,s_{14},s_{15})$; wherein $\rightarrow$ represents value assignment;

when the linear feedback shift register unit runs in the work mode, the feedback subunit is used for performing variable work mode operation of the linear feedback shift register, including:

calculating result $s_{16}$ of $[2^{15}s_{15}+2^{17}s_{13}+2^{21}s_{10}+2^{20}s_4+(1+2^8)s_0]\mod(2^{31}-1)$, wherein mod represents integer complementation;

updating the status words of the 16 31-bit registers: $(s_1,s_2,...,s_{15},s_{16}) \rightarrow (s_0,s_1,...,s_{14},s_{15})$; wherein $\rightarrow$ represents value assignment.

12. The device of any one of claims 8-11, wherein the 16 31-bit registers are general registers or memory units.

13. The device of any one of claims 8-11, wherein the bit restructuring unit include:

a first bit restructuring subunit used for selecting the left 16-bit character string in the status word of the sixteenth register and the right 16-bit character string in the status word of the fifteenth register, and outputting to the nonlinear state filtering operation unit after connection;

a second bit restructuring subunit used for selecting the right 16-bit character string in the status word of the thirteenth register and the left 16-bit character string in the status word of the ninth register, and outputting to the nonlinear state filtering operation unit after connection;

a third bit restructuring subunit used for selecting the left 16-bit character string in the status word of the eighth register and the right 16-bit character string in the status word of the sixth register, and outputting to the nonlinear state filtering operation unit after connection;

a forth bit restructuring subunit used for selecting the right 16-bit character string in the status word of the third register and the left 16-bit character string in the status word of the first register, and outputting to the nonlinear state filtering operation unit after connection;

wherein when the nonlinear state filtering operation unit includes:

two 32-bit registers $R_1$ and $R_2$, of which the initial status words are all 0's;

an operation subunit used for calculating to obtain the results of the nonlinear state filtering operation according to data output from the first bit restructuring subunit and the status words of the 32-bit registers $R_1$ and $R_2$;

an updating subunit used for updating the status words of the 32-bit registers $R_1$ and $R_2$ according to data output from the second and third bit restructuring subunits.

**14.** The device of claim 13, wherein when the 32-bit registers $R_1$ and $R_2$ are general registers or memory units.

**15.** The device of claim 13, wherein the operation subunit includes:

a first function module used for receiving two way data coming from the first bit restructuring subunit and the 32-bit register $R_1$, performing XOR operation with the two way data and outputting result to a second function module;

the second function module used for receiving two way data coming from the first function module and the 32-bit register $R_2$, performing modulo $2^{32}$ addition operation with the two way data and outputting result to the key word output unit.

**16.** The device of claim 13, wherein the updating subunit includes:

a third function module used for receiving two way data coming from the second bit restructuring subunit and the 32-bit register $R_1$, performing modulo $2^{32}$ addition operation with the two way data and outputting result to a fifth function module;

a forth function module used for receiving two way data coming from the third bit restructuring subunit and the 32-bit register $R_2$, performing XOR operation with the two way data and outputting result to the fifth function module;

the fifth function module used for receiving data $W_1$ coming from the third function module and data $W_2$ coming from the forth function module, selecting and connecting the right 16-bit character string of $W_1$ and the left 16-bit character string of $W_2$, and then outputting result to a sixth function module; the fifth function module also used for selecting and connecting the right 16-bit character string of $W_2$ and the left 16-bit character string of $W_1$, and then outputting result to a seventh function module;

the sixth function module used for receiving data coming from the fifth function module and performing following operations with the data:

performing linear transformation $L_1$ on 32-bit words of the data;
taking result of the linear transformation $L_1$ as an input and performing S-box transformation;
outputting result of the S-box transformation to the 32-bit register $R_1$;

the seventh function module used for receiving data coming from the fifth function module and performing following operations with the data:

performing linear transformation $L_2$ on 32-bit words of the data;
taking result of the linear transformation $L_2$ as an input and performing S-box transformation;
outputting result of the S-box transformation to the 32-bit register $R_2$.

**17.** The device of claim 16, wherein the linear transformations $L_1$ and $L_2$ are:

$$L_1(X) = X \oplus (X <<< 2) \oplus (X <<< 10) \oplus (X <<< 18) \oplus (X <<< 24),$$

$$L_2(X) = X \oplus (X <<< 8) \oplus (X <<< 14) \oplus (X <<< 22) \oplus (X <<< 30);$$

wherein <<< represents rotate left, $\oplus$ represents bitwise XOR operation.

**18.** The device of any one of claims 8-11, wherein value of N is 32.

**Patentansprüche**

**1.** Verfahren zur Implementierung einer Stromverschlüsselung, **dadurch gekennzeichnet, dass** sie umfasst:

die Implementierung einer Schlüsselerweiterungsoperation mit einem voreingestellten 128-Bit Anfangsschlüssel und einem 128-Bit Anfangsvektor, um 16 31-Bit Zustandsvektoren (101) und das Laden von 16 Zustandsvariablen in 16 31-Bit Register eines linearen Feedback-Schieberegisters als anfängliche Statuswörter der 16 31-Bit Register zu erhalten;
die Implementierung von Operationen mit N Runden unter Verwendung der Zustandsvariablen, wobei N eine positive ganze Zahl ist und wiederum jede Operationsrunde beinhaltet: Bit-Umstrukturierung, nicht lineare Zustandsfilteroperation und variable Initialisierungsmodusoperation des linearen Feedback-Umschaltregisters (102);
die Verarbeitung der Ausgabeergebnisse nach den Operationen mit N Runden abwechselnd unter Verwendung der Bit-Umstrukturierung, der nicht linearen Zustandsfilteroperation und des Verwerfens von Ausgabeergebnissen sowie der variablen Arbeitsmodusoperation des nicht linearen Feedback-Schieberegisters (103);
die Implementierung im Anschluss an Schritte bei jedem Uhrticken und jeweils abwechselnd: Bit-Umstrukturierung, nicht lineare Zustandsfilteroperation, XOR-Operation und variable Arbeitsmodusoperationen des linearen Feedback-Schieberegisters, um eine 32-Bit Pseudo-Zufallssequenz (104) zu erhalten.

**2.** Verfahren gemäß Anspruch 1, bei dem die Schlüsselerweiterungsoperation einschließt:

das Teilen einer Bitleiste D mit einer voreingestellten Länge von 240 Bits in Leisten mit 16 Zeichen, von denen jede eine Länge von 15 Bit hat: D=d[0]‖d[1]‖...‖d[15], ‖ stellt den Anschluss dar;
das Teilen des Anfangsschlüssels k und des Vektors iv in Leisten mit 16 Zeichen, von denen jede eine Länge von 8 Bit hat:

$$k=k[0]\|k[1]\|...\|k[15], \quad iv=iv[0]\|iv[1]\|...\|iv[15]; \quad s_i=k[i]\|d[i]\|iv[i]$$

wobei $s_i$ die Zustandsvariablen darstellt und die Werte von i von 0 bis 15 lauten.

**3.** Verfahren gemäß Anspruch 1, bei dem die nicht lineare Zustandsfilteroperation einschließt:

$$W=X_0 \oplus R_1 \boxplus R_2$$

wobei W die Ausgabe der nicht linearen Zustandsfilteroperation darstellt; $X_0$ das erste 32-Bit Wort darstellt, das durch die Bit-Umstrukturierung umstrukturiert wurde; $\oplus$ stellt die bitweise XOR-Operation dar; $\boxplus$ stellt die modulo $2^{32}$ Additionsoperation dar;

$$W_1=R_1 \boxplus X_1, \quad W_2=R_2 \oplus X_2, \quad R_1=S(L_1(W_{1L}\|W_{2H}))$$

wobei $X_1$ und $X_2$ das zweite und dritte 32-Bit-Wort darstellen, die durch die Bit-Umstrukturierung umstrukturiert sind; $R_1$ und $R_2$ stellen zwei 32-Bit Register dar, deren Anfangsstatuswörter alle auf 0 eingestellt sind; S stellt eine S-Box Transformation dar, die aus vier 8*8 S-Boxen hergestellt ist; $L_1$ und $L_2$ stellen eine lineare Transformation dar; H stellt die Auswahl einer linken 16-Bit Zeichenleiste dar; L stellt die Auswahl einer rechten 16-Bit Zeichenleiste dar; und ∥ stellt den Anschluss dar.

4. Verfahren gemäß Anspruch 3, bei dem die linearen Transformationen $L_1$ und $L_2$ sind:

$$L_1(X) = X \oplus (X <<< 2) \oplus (X <<< 10) \oplus (X <<< 18) \oplus (X <<< 24),$$

$$L_2(X) = X \oplus (X <<< 8) \oplus (X <<< 14) \oplus (X <<< 22) \oplus (X <<< 30);$$

wobei <<< die linke Rotation darstellt, $\oplus$ die bitweise XOR-Operation darstellt.

5. Verfahren gemäß Anspruch 1, bei dem die XOR-Operation einschließt:

$$Z = W \oplus X_3;$$

wobei Z das Ergebnis der XOR-Operation darstellt; W das Ergebnis der nicht linearen Zustandsfilteroperation darstellt; $X_3$ das vierte 32-Bit Wort darstellt, das durch die Bit-Umstrukturierung umstrukturiert ist.

6. Verfahren gemäß Anspruch 1, bei dem die variable Arbeitsmodusoperation des linearen Feedback-Schieberegisters einschließt:

$$s_{16} = \left[ 2^{15} s_{15} + 2^{17} s_{13} + 2^{21} s_{10} + 2^{20} s_4 + (1 + 2^8) s_0 \right] \mathrm{mod} \left( 2^{31} - 1 \right)$$

wobei mod die Komplementierung der ganzen Zahl darstellt;
$(s_1, s_2, ..., s_{15}, s_{16}) \rightarrow (s_0, s_1, ..., s_{14}, s_{15})$
wobei $\rightarrow$ die Wertbelegung darstellt; von $s_0$ bis $s_{15}$ 16 Zustandsvariable darstellt.

7. Verfahren gemäß irgendeinem der Ansprüche 1 - 6, bei dem der Wert von N 32 beträgt.

8. Vorrichtung zur Implementierung einer Stromverschlüsselung, **dadurch gekennzeichnet, dass** sie umfasst:

eine Schlüsselerweiterungseinheit, die zur Implementierung einer Schlüsselerweiterungsoperation mit einem voreingestellten 128-Bit Anfangsschlüssel und einem 128-Bit Anfangsvektor verwendet wird, um 16 31-Bit Zustandsvariablen und das Laden der 16 Zustandsvariablen in 16 31-Bitregister einer linearen Feedback-Schieberegistereinheit als Anfangsstatuswörter der 16 31-Bitregister bzw. über eine Steuereinheit unter Verwendung irgendeines Verfahrens zu erhalten;
die für die Implementierung von Operationen mit N Runden verwendete Steuereinheit unter Verwendung von 16 Anfangsstatuswörtern, wobei N eine positive ganze Zahl ist; wobei die Steuereinheit in jeder Operationsrunde abwechselnd eine Bit-Umstrukturierungseinheit, eine nicht lineare Zustandsfilteroperationseinheit und eine Feedback-Untereinheit in der linearen Feedback-Umschaltregistereinheit aufruft, um die Bit-Umstrukturierung, die nicht lineare Zustandsfilteroperation und die variable Initialisierungsmodusoperation eines linearen Feedback-Schieberegisters abzuschließen; nach den Operationen mit N Runden ruft die Steuereinheit abwechselnd die Bit-Umstrukturierungseinheit, die nicht lineare Zustandsfilteroperationseinheit und die Feedback-Untereinheit auf, um die Bit-Umstrukturierung, die nicht lineare Zustandsfilteroperation und das verworfene Ergebnis der Operationen sowie die variable Arbeitsmodusoperation des linearen Feedback-Schieberegisters abzuschließen; dann ruft die Steuereinheit bei jedem Uhrticken abwechselnd die Bit-Umstrukturierungseinheit, die nicht lineare Zustandsfilteroperationseinheit, eine Schlüsselwortausgabeeinheit und die Feedback-Untereinheit auf, um die Bit-Umstrukturierung, die nicht lineare Zustandsfilteroperation, die XOR-Operation und die variable Arbeitsmodusoperation des linearen Feedback-Schieberegisters abzuschließen, um eine 32-Bit Pseudo-Zufallssequenz zu erhalten;
wobei
die Bit-Umstrukturierungseinheit zur Umstrukturierung 4 von 32-Bit Wörtern gemäß den 16 Statuswörtern in der linearen Feedback-Schieberegistereinheit verwendet wird;
die nicht lineare Zustandsfilteroperationseinheit wird zur Berechnung verwendet, um das Ergebnis der nicht linearen Zustandsfilteroperation gemäß den ersten drei umstrukturierten 32-Bit Wörtern zu erhalten,
die Schlüsselwortausgabeeinheit wird zur Implementierung der XOR-Operation gemäß dem Ergebnis der nicht linearen Zustandsfilteroperation und dem vierten umstrukturierten 32-Bit verwendet, um eine 32-Bit Pseudozufallssequenzausgabe zu erhalten;
die Feedback-Untereinheit wird zur Aktualisierung der Statusworte in den 16 31-Bitregistern verwendet.

9. Vorrichtung gemäß Anspruch 8, bei der die Schlüsselerweiterungseinheit einschließt:

Eine teilende Untereinheit, die zum Teilen einer Bit-Leiste D mit einer voreingestellten Länge von 240 Bits in 16 Zeichenleisten verwendet wird, die jeweils eine Länge von 15 Bits haben: D=d[0]‖d[1]‖...‖d[15] wobei ‖ den Anschluss darstellt, und das Teilen des Anfangsschlüssels k und des Anfangsvektors iv in 16 Zeichenleisten, von der jede jeweils eine Länge von 8 Bit hat:

$$k=k[0]\|k[1]\|...\|k[15] \quad ; \quad iv=iv[0]\|iv[1]\|...\|iv[15] ;$$

eine generierende Untereinheit, die zum Generieren von 16 31-Bitzustandsvariablen verwendet wird: $s_i=k[i]\|d[i]\|iv[i]$, bei der die Werte von i von 0 bis 15 betragen.

10. Vorrichtung gemäß Anspruch 8, bei der das beliebige Verfahren einschließt:

Umschaltung oder direkte Wertbelegung.

11. Vorrichtung gemäß Anspruch 8, bei der die lineare Feedback-Schieberegistereinheit im Initialisierungsmodus arbeitet, die Feedback-Untereinheit zur Durchführung einer variablen Initialisierungsmodusoperation des linearen Feedback-Schieberegisters verwendet wird, unter Einschluss von:

dem Verwerfen des niedrigsten 1-Bits des Ergebnisses der nicht linearen Zustandsfilteroperation, um ein Ergebnis u zu erhalten;
dem Berechnen des Ergebnisses v von

$$\left[ 2^{15}s_{15} + 2^{17}s_{13} + 2^{21}s_{10} + 2^{20}s_4 + (1+2^8)s_0 \right] \bmod \left( 2^{31}-1 \right)$$

wobei mod die Komplementierung einer ganzen Zahl darstellt;
dem Berechnen des XOR-Ergebnisses $s_{16}$ von v und u;
dem Bestimmen, ob der Wert von $s_{16}$ 0 ist; falls ja, Herstellen von $s_{16} = 2^{31}$-1; andernfalls Beibehalten des unveränderten Originalwertes von $s_{16}$;
dem Aktualisieren der Statuswörter der 16 31-Bit Register:

$(s_1,s_2,...,s_{15},s_{16}) \rightarrow (s_0,s_1,...,s_{14},s_{15})$, wobei→ die Wertbelegung darstellt;

wenn die lineare Feedback-Schieberegistereinheit im Arbeitsmodus arbeitet, wird die Feedback-Untereinheit zur Durchführung der variablen Arbeitsmodusoperation des linearen Feedback-Schieberegisters verwendet, unter Einschluss von:

dem Berechnen des Ergebnisses $s_{16}$ von

$$\left[ 2^{15}s_{15} + 2^{17}s_{13} + 2^{21}s_{10} + 2^{20}s_4 + (1+2^8)s_0 \right] \bmod \left( 2^{31}-1 \right)$$

wobei mod die Komplementierung der ganzen Zahl darstellt;
dem Aktualisieren der Statuswörter der 16 31-Bit Register:

$$(s_1,s_2,...,s_{15},s_{16}) \rightarrow (s_0,s_1,...,s_{14},s_{15}) \text{ wobei } \rightarrow \text{ die Wertbelegung darstellt.}$$

12. Vorrichtung gemäß irgendeinem der Ansprüche 8 - 11, bei der die 16 31-Bitregister allgemeine Register oder Speichereinheiten sind.

13. Vorrichtung gemäß irgendeinem der Ansprüche 8 - 11, bei der die Bit-Umstrukturierungseinheit einschließt:

eine erste Bit-Umstrukturierungsuntereinheit, die zur Auswahl der linken 16-Bit Zeichenleiste in dem Statuswort des sechzehnten Registers und der rechten 16-Bit Zeichenleiste in dem Statuswort des fünfzehnten Registers verwendet wird und die Ausgabe an die nicht lineare Zustandsfilteroperationseinheit nach dem Anschluss;
eine zweite Bit-Umstrukturierungsuntereinheit, die zur Auswahl der rechten 16-Bit Zeichenleiste in dem Statuswort des dreizehnten Registers und der linken 16-Bit Zeichenleiste in dem Statuswort des neunten Registers verwendet wird und die Ausgabe an die nicht lineare Zustandsfilteroperationseinheit nach dem Anschluss;
eine dritte Bit-Umstrukturierungsuntereinheit, die zur Auswahl der linken 16-Bit Zeichenleiste in dem Statuswort des achten Registers und der rechten 16-Bit Zeichenleiste in dem Statuswort des sechsten Registers verwendet wird und die Ausgabe an die nicht lineare Zustandsfilteroperationseinheit nach dem Anschluss;
eine vierte Bit-Umstrukturierungsuntereinheit, die zur Auswahl der rechten 16-Bit Zeichenleiste in dem Statuswort des dritten Registers und der linken 16-Bit Zeichenleiste in dem Statuswort des ersten Registers verwendet wird und die Ausgabe an die nicht lineare Zustandsfilteroperationseinheit nach dem Anschluss;
wobei, wenn die nicht lineare Zustandsfilteroperationseinheit einschließt:

zwei 32-Bit Register $R_1$ und $R_2$, von denen die Anfangsstatuswörter alle 0 sind;
eine Operationsuntereinheit, die zur Berechnung verwendet wird, um die Ergebnisse der nicht linearen Zustandsfilteroperation gemäß der Datenausgabe von der ersten Bit-Umstrukurierungsuntereinheit und die Statuswörter der 32-Bit Register $R_1$ und $R_2$ zu erhalten;
eine Aktualisierungsuntereinheit, die zur Aktualisierung der Statuswörter der 32-Bit Register $R_1$ und $R_2$ gemäß der Datenausgabe von den zweiten und dritten Bit-Umstrukturierungsuntereinheiten verwendet wird.

14. Vorrichtung gemäß Anspruch 13, bei der die 32-Bit Register $R_1$ und $R_2$ allgemeine Register oder Speichereinheiten sind.

15. Vorrichtung gemäß Anspruch 13, bei der die Operationsuntereinheit einschließt:

ein erstes Funktionsmodul, das für den Empfang von Zwei-Wege-Daten verwendet wird, die von der ersten Bit-Umstrukturierungsunterheit und dem 32-Bit Register $R_1$ kommen, Durchführen der XOR-Operation mit den Zwei-Wege-Daten und Ausgabe des Ergebnisses an ein zweites Funktionsmodul;
das zweite Funktionsmodul wird für den Empfang von Zwei-Wege-Daten verwendet, die von dem ersten Funktionsmodul und dem 32-Bit Register $R_2$ kommen, Durchführen der modulo $2^{32}$ Additionsoperation mit den Zwei-Wege-Daten und Ausgabe des Ergebnisses an die Schlüsselwortausgabeeinheit.

16. Vorrichtung gemäß Anspruch 13, bei der die Aktualisierungsuntereinheit einschließt:

ein drittes Funktionsmodul, das für den Empfang von Zwei-Wege-Daten verwendet wird, die von der zweiten Bit-Umstrukturierungsuntereinheit und dem 32-Bit Register $R_1$ kommen, Durchführen der modulo $2^{32}$ Additionsoperation mit den Zwei-Wege-Daten und Ausgabe des Ergebnisses an ein fünftes Funktionsmodul;
ein viertes Funktionsmodul, das für den Empfang von Zwei-Wege-Daten verwendet wird, die von der dritten Bit-Umstrukturierungsuntereinheit und dem 32-Bit Register $R_2$ kommen, Durchführen der XOR-Operation mit den Zwei-Wege-Daten und Ausgabe des Ergebnisses an das fünfte Funktionsmodul;
das fünfte Funktionsmodul, das für den Empfang von Daten $W_1$ verwendet wird, die von dem dritten Funktionsmodul kommen, und Daten $W_2$, die von dem vierten Funktionsmodul kommen, Auswahl und Anschluss der rechten 16-Bit Zeichenleiste von $W_1$ und der linken 16-Bit Zeichenleiste von $W_2$, und dann Ausgabe des Ergebnisses an ein sechstes Funktionsmodul; das fünfte Funktionsmodul wird ebenfalls für die Auswahl und den Anschluss der rechten 16-Bit Zeichenleiste von $W_2$ und der linken 16-Bit Zeichenleiste von $W_1$ und dann zur Ausgabe des Ergebnisses an ein siebtes Funktionsmodul verwendet;
das sechste Funktionsmodul, das für den Empfang von Daten verwendet wird, die von dem fünften Funktionsmodul kommen und Durchführung der folgenden Operationen mit den Daten:

Durchführung der linearen Transformation $L_1$ auf 32-Bit Wörtern der Daten;
Aufnahme des Ergebnisses der linearen Transformation $L_1$ als eine Eingabe und Durchführung der S-Box Transformation;
Ausgabe des Ergebnisses der S-Box Transformation an das 32-Bit Register $R_1$;
das siebte Funktionsmodul, das für den Empfang von Daten verwendet wird, die von dem fünften Funktionsmodul kommen und Durchführung der folgenden Operationen mit den Daten:

Durchführung der linearen Transformation $L_2$ auf 32-Bit Wörtern der Daten;
Annahme des Ergebnisses der linearen Transformation $L_2$ als eine Eingabe und Durchführung der S-Box Transformation;
Ausgabe des Ergebnisses der S-Box Transformation an das 32-Bit Register $R_2$.

**17.** Vorrichtung gemäß Anspruch 16, bei der die linearen Transformationen $L_1$ und $L_2$ sind:

$$L_1(X) = X \oplus (X <<< 2) \oplus (X <<< 10) \oplus (X <<< 18) \oplus (X <<< 24),$$

$$L_2(X) = X \oplus (X <<< 8) \oplus (X <<< 14) \oplus (X <<< 22) \oplus (X <<< 30);$$

wobei <<< die Rotation nach links darstellt, $\oplus$ die bitweise XOR-Operation darstellt.

**18.** Vorrichtung gemäß irgendeinem der Ansprüche 8 - 11, bei der der Wert von N 32 beträgt.

## Revendications

**1.** Procédé de mise en oeuvre d'un chiffrement de flux continu, **caractérisé en ce que** comprenant :

la mise en oeuvre d'une opération d'extension de clé avec une clé initiale à 128 bits et un vecteur initial à 128 bits prédéfinis, pour obtenir 16 variables d'état à 31 bits (101) et le chargement de 16 variables d'état dans 16 registres à 31 bits d'un registre à décalage à rebouclage linéaire comme mots de statut initiaux des 16 registres à 31 bits;
la mise en oeuvre d'opérations à N rondes en utilisant les variables d'état, dans lequel N est un entier positif et tour à tour chaque ronde d'opération inclut: une restructuration de bits, une opération de filtrage d'états non linéaire et une opération de mode d'initialisation de variables du registre à décalage à rebouclage linéaire (102) ;
le traitement de résultats de sortie après les opérations à N rondes tour à tour en utilisant une restructuration de bits, une opération de filtrage d'états non linéaire et un rejet de résultats de sortie, ainsi qu'une opération de mode de travail variable du registre à décalage à rebouclage linéaire (103) ;
la mise en oeuvre des étapes suivantes à chaque coup d'horloge et respectivement tour à tour : restructuration de bits, opération de filtrage d'états non linéaire, opération XOR, et opérations de mode de travail variable du registre à décalage à rebouclage linéaire, pour obtenir une séquence pseudo-aléatoire à 32 bits (104).

**2.** Procédé selon la revendication 1, dans lequel l'opération d'extension de clé inclut:

la division d'une chaîne de bits D ayant une longueur prédéfinie de 240 bits en 16 chaînes de caractères ayant chacune une longueur de 15 bits: D=d[0]‖d[1]‖...‖d[15], ‖ représente une connexion;
la division de la clé initiale k et du vecteur initial iv en 16 chaînes de caractères ayant chacune une longueur de 8 bits: k=k[0]‖k[1]‖...‖k[15], iv=iv[0]‖iv[1]‖...‖iv[15]; $s_i$=k[i]‖d[i]‖iv[i], dans laquelle les $S_i$ représentent des variables d'état, et les valeurs de i sont de 0 à 15.

**3.** Procédé selon la revendication 1, dans lequel l'opération de filtrage d'états non linéaire inclut:

$$W = X_0 \oplus R_1 \boxplus R_2 ;$$

dans laquelle W représente une sortie de l'opération de filtrage d'états non linéaire; $X_0$ représente le premier mot à 32 bits restructuré par la restructuration de bits; $\oplus$ représente une opération XOR sur les bits; $\square$ représente une opération d'addition modulo $2^{32}$;

$$W_1=R_1 \; \square \; X_1, \; W_2=R_2 \; \oplus \; X_2, \; R_1=S(L_1(W_{1L}\|W_{2H})) \; ;$$

dans lesquelles $X_1$ et $X_2$ représentent les deuxième et troisième mots à 32 bits restructurés par la restructuration de bits; $R_1$ et $R_2$ représentent deux registres à 32 bits, dont les mots de statut initiaux sont tous fixé à 0; S représente une transformation par boîtes S qui est constituée de quatre boîtes S 8*8; $L_1$ et $L_2$ représentent une transformation linéaire; H représente la sélection de la chaîne de caractères à 16 bits gauche; L représente la sélection de la chaîne de caractères à 16 bits droite; et $\|$ représente une connexion.

4.  Procédé selon la revendication 3, dans lequel les transformations linéaires $L_1$ et $L_2$ sont :

$$L_1(X)=X \; \oplus \; (X<<<2) \; \oplus \; (X<<<10) \; \oplus \; (X<<<18) \; \oplus \; (X<<<24),$$

$$L_2(X)=X \; \oplus \; (X<<<8) \; \oplus \; (X<<<14) \; \oplus \; (X<<<22) \; \oplus \; (X<<<30) \; ;$$

dans lesquelles <<< représente une rotation à gauche, $\oplus$ représente une opération XOR sur les bits.

5.  Procédé selon la revendication 1, dans lequel l'opération XOR inclut:

$$Z=W \; \oplus \; X_3 \; ;$$

dans laquelle Z représente le résultat de l'opération XOR ; W représente le résultat de l'opération de filtrage d'état non linéaire; $X_3$ représente le quatrième mot à 32 bits restructuré par la restructuration de bits.

6.  Procédé selon la revendication 1, dans lequel l'opération de mode de travail variable du registre à décalage à rebouclage linéaire inclut:

$S_{16}=[2^{15}s_{15}+2^{17}s_{13}+2^{21}s_{10}+2^{20}s_4+(1+2^8)s_0]\mod(2^{31}-1)$, dans laquelle mod représente le complément à l'entier; $(s_1,s_2,...,s_{15},s_{16}) \rightarrow (s_0,s_1,...,s_{14},s_{15})$; dans laquelle $\rightarrow$ représente une attribution de valeur; de $s_0$ à $s_{15}$ représentent 16 variables d'état.

7.  Procédé selon l'une quelconque des revendications 1-6, dans lequel la valeur de N est 32.

8.  Dispositif pour mettre en oeuvre un chiffrement de flux, **caractérisé en ce que** comprenant :

    une unité d'extension de clé utilisée pour mettre en oeuvre une opération d'extension de clé avec une clé initiale à 128 bits et un vecteur initial à 128 bits prédéfinis pour obtenir 16 variables d'état à 31 bits, et charger les 16 variables d'état dans 16 registres à 31 bits d'une unité de registre à décalage à rebouclage linéaire comme mots de statut initiaux des 16 registres à 31 bits, respectivement, par l'intermédiaire d'une unité de commande en utilisant un quelconque procédé;
    l'unité de commande utilisée pour mettre en oeuvre des opérations à N rondes en utilisant les 16 mots de statut initiaux, dans lequel N est un entier positif; dans lequel à chaque ronde d'opération, l'unité de commande fait tour à tour appel à une unité de restructuration de bits, une unité d'opération de filtrage d'états non linéaire et une sous-unité de rétroaction dans l'unité de registre à décalage à rebouclage linéaire, pour mener à bien une restructuration de bits, une opération de filtrage d'états non linéaire et une opération de mode d'initialisation de variables d'un registre à décalage à rebouclage linéaire; après les opérations à N rondes, l'unité de commande fait tour à tour appel à l'unité de restructuration de bits, à l'unité d'opération de filtrage d'états non linéaire et à la sous-unité de rétroaction pour mener à bien une restructuration de bits, une opération de filtrage d'états non linéaire et rejeter un résultat des opérations, ainsi qu'une opération de mode de travail variable du registre à décalage à rebouclage linéaire; ensuite, à chaque coup d'horloge, l'unité de commande fait tour à tour appel à l'unité de restructuration de bits, à l'unité d'opération de filtrage d'états non linéaire, à une unité de sortie de mots-clés et à la sous-unité de rétroaction pour mener à bien une restructuration de bits, une opération de filtrage d'états non linéaire, une opération XOR, et une opération de mode de travail variable du registre à décalage à rebouclage linéaire, pour obtenir une séquence pseudo-aléatoire à 32 bits;

dans lequel,

l'unité de restructuration de bits est utilisée pour restructurer 4 mots à 32 bits conformément aux 16 mots de statut dans l'unité de registre à décalage à rebouclage linéaire;

l'unité d'opération de filtrage d'états non linéaire est utilisée pour calculer pour obtenir un résultat de l'opération de filtrage d'états non linéaire conformément aux trois premiers mots à 32 bits restructurés;

l'unité d'entrée de mots-clés est utilisée pour mettre en oeuvre une opération XOR conformément au résultat de l'opération de filtrage d'états non linéaire et au quatrième mot à 32 bits restructuré, pour obtenir une sortie de séquence pseudo-aléatoire à 32 bits;

la sous-unité de rétroaction est utilisée pour mettre à jour les mots de statut dans les 16 registres à 31 bits.

9. Dispositif selon la revendication 8, dans lequel l'unité d'extension de clé inclut:

une sous-unité de division utilisée pour diviser une chaîne de bits D ayant une longueur prédéfinie de 240 bits en 16 chaînes de caractères ayant chacune une longueur de 15 bits: D=d[0]‖d[1]‖...‖d[15], ‖ représente une connexion, et diviser la clé initiale k et le vecteur initial iv en 16 chaînes de caractères ayant chacune une longueur de 8 bits, respectivement :

$$k=k[0]\|k[1]\|\ldots\|k[15], \; iv=iv[0]\|iv[1]\|\ldots\|iv[15] \;$$

une sous-unité de génération utilisée pour générer 16 variables d'état à 31 bits : $s_i=k[i]\|d[i]\|iv[i]$, dans laquelle les valeurs de i sont de 0 à 15.

10. Dispositif selon la revendication 8, dans lequel le procédé quelconque inclut: une attribution de valeur par décalage ou directe.

11. Dispositif selon la revendication 8, dans lequel, lorsque l'unité de registre à décalage à rebouclage linéaire fonctionne dans le mode d'initialisation, la sous-unité de rétroaction est utilisée pour exécuter une opération de mode d'initialisation de variables du registre à décalage à rebouclage linéaire, incluant:

le rejet du bit le plus bas du résultat de l'opération de filtrage d'états non linéaire, pour obtenir un résultat u ;

le calcul du résultat v de $[2^{15}s_{15}+2^{17}s_{13}+2^{21}s_{10}+2^{20}s_4+(1+2^8)s_0]mod(2^{31}-1)$, dans laquelle mod représente le complément à l'entier;

le calcul du résultat XOR $s_{16}$ de v et u;

la détermination si une valeur de $s_{16}$ est 0; si oui, donner $s_{16}=2^{31}-1$; sinon, conserver la valeur d'origine de $s_{16}$ inchangée;

la mise à jour des mots de statut des 16 registres à 31 bits: $(s_1,s_2,...,s_{15},s_{16}) \rightarrow (s_0,s_1,...,s_{14},s_{15})$; dans laquelle $\rightarrow$ représente une attribution de valeur;

lorsque l'unité de registre à décalage à rebouclage linéaire fonctionne dans le mode de travail, la sous-unité de rétroaction est utilisée pour exécuter une opération de mode de travail variable du registre à décalage à rebouclage linéaire, incluant:

le calcul d'un résultat $s_{16}$ de $[2^{15}s_{15}+2^{17}s_{13}+2^{21}s_{10}+2^{20}s_4+(1+2^8)s_0]mod(2^{31}-1)$, dans laquelle mod représente le complément à l'entier;

la mise à jour des mots de statut des 16 registres à 31 bits: $(s_1,s_2,...,s_{15},s_{16}) \rightarrow (s_0,s_1,...,s_{14},s_{15})$; dans laquelle $\rightarrow$ représente une attribution de valeur.

12. Dispositif selon l'une quelconque des revendications 8-11, dans lequel les 16 registres à 31 bits sont des registres généraux ou des unités de mémoire.

13. Dispositif selon l'une quelconque des revendications 8-11, dans lequel l'unité de restructuration de bits inclut:

une première sous-unité de restructuration de bits utilisée pour sélectionner la chaîne de caractères à 16 bits gauche dans le mot de statut du seizième registre et la chaîne de caractères à 16 bits droite dans le mot de statut du quinzième registre, et délivrer en sortie dans l'unité d'opération de filtrage d'états non linéaire après connexion ;

une deuxième sous-unité de restructuration de bits utilisée pour sélectionner la chaîne de caractères à 16 bits droite dans le mot de statut du treizième registre et la chaîne de caractères à 16 bits gauche dans le mot de statut du neuvième registre, et délivrer en sortie dans l'unité d'opération de filtrage d'états non linéaire après connexion ;

une troisième sous-unité de restructuration de bits utilisée pour sélectionner la chaîne de caractères à 16 bits gauche dans le mot de statut du huitième registre et la chaîne de caractères à 16 bits droite dans le mot de statut du sixième registre, et délivrer en sortie dans l'unité d'opération de filtrage d'états non linéaire après connexion ;

une quatrième sous-unité de restructuration de bits utilisée pour sélectionner la chaîne de caractères à 16 bits droite dans le mot de statut du troisième registre et la chaîne de caractères à 16 bits gauche dans le mot de statut du premier registre, et délivrer en sortie dans l'unité d'opération de filtrage d'états non linéaire après connexion ;

dans lequel, lorsque l'unité d'opération de filtrage d'états non linéaire inclut :

deux registres à 32 bits $R_1$ et $R_2$, dont les mots de statut initiaux sont tous 0 ;

une sous-unité d'opération utilisée pour calculer pour obtenir les résultats de l'opération de filtrage d'états non linéaire conformément aux données délivrées en sortie de la première sous-unité de restructuration de bits et les mots de statut des registres à 32 bits $R_1$ et $R_2$;

une sous-unité de mise à jour utilisée pour mettre à jour les mots de statut des registres à 32 bits $R_1$ et $R_2$ conformément aux données délivrées en sortie des deuxième et troisième sous-unités de restructuration de bits.

**14.** Dispositif selon la revendication 13, dans lequel lorsque les registres à 32 bits $R_1$ et $R_2$ sont des registres généraux ou des unités de mémoire.

**15.** Dispositif selon la revendication 13, dans lequel la sous-unité d'opération inclut :

un premier module de fonction utilisé pour recevoir des données bidirectionnelles provenant de la première sous-unité de restructuration de bits et du registre à 32 bits $R_1$, exécuter une opération XOR avec les données bidirectionnelles et délivrer en sortie un résultat dans un deuxième module de fonction ;

le deuxième module de fonction utilisé pour recevoir des données bidirectionnelles provenant du premier module de fonction et du registre à 32 bits $R_2$, exécuter une opération d'addition modulo $2^{32}$ avec les données bidirectionnelles et délivrer en sortie un résultat dans l'unité de sortie de mots-clés.

**16.** Dispositif selon la revendication 13, dans lequel la sous-unité de mise à jour inclut :

un troisième module de fonction utilisé pour recevoir des données bidirectionnelles provenant de la deuxième sous-unité de restructuration de bits et du registre à 32 bits $R_1$, exécuter une opération d'addition modulo $2^{32}$ avec les données bidirectionnelles et délivrer en sortie un résultat dans un cinquième module de fonction ;

un quatrième module de fonction utilisé pour recevoir des données bidirectionnelles provenant de la troisième sous-unité de restructuration de bits et du registre à 32 bits $R_2$, exécuter une opération XOR avec les données bidirectionnelles et délivrer en sortie un résultat dans le cinquième module de fonction ;

le cinquième module de fonction utilisé pour recevoir des données $W_1$ provenant du troisième module de fonction et des données $W_2$ provenant du quatrième module de fonction, sélectionner et connecter la chaîne de caractères à 16 bits droite de $W_1$ et la chaîne de caractères à 16 bits gauche de $W_2$, et ensuite délivrer en sortie un résultat dans un sixième module de fonction ; le cinquième module de fonction également utilisé pour sélectionner et connecter la chaîne de caractères à 16 bits droite de $W_2$ et la chaîne de caractères à 16 bits gauche de $W_1$, et ensuite délivrer en sortie un résultat dans un septième module de fonction ;

le sixième module de fonction utilisé pour recevoir des données provenant du cinquième module de fonction et exécuter les opérations suivantes avec les données :

exécution d'une transformation linéaire $L_1$ sur des mots à 32 bits des données ;

prise du résultat de la transformation linéaire $L_1$ comme une entrée et exécution d'une transformation à boîtes S ;

délivrance en sortie d'un résultat de la transformation à boîtes S dans le registre à 32 bits $R_1$;

le septième module de fonction utilisé pour recevoir des données provenant du cinquième module de fonction et exécuter les opérations suivantes avec les données :

exécution d'une transformation linéaire $L_2$ sur des mots à 32 bits des données ;
prise du résultat de la transformation linéaire $L_2$ comme une entrée et exécution d'une transformation à boîtes S ;
délivrance en sortie d'un résultat de la transformation à boîtes S dans le registre à 32 bits $R_2$.

**17.** Dispositif selon la revendication 16, dans lequel les transformations linéaires $L_1$ et $L_2$ sont :

$$L_1(X)=X \oplus (X<<<2) \oplus (X<<<10) \oplus (X<<<18) \oplus (X<<<24),$$

$$L_2(X)=X \oplus (X<<<8) \oplus (X<<<14) \oplus (X<<<22) \oplus (X<<<30) ;$$

dans lesquelles <<< représente une rotation à gauche, $\oplus$ représente une opération XOR sur les bits.

**18.** Dispositif selon l'une quelconque des revendications 8-11, dans lequel une valeur de N est 32.

101

implementing a key expansion operation with a pre-set 128-bit initial key and 128-bit initial vector to obtain 16 31-bit state variables

102

implementing N rounds operations using the obtained state variables, wherein N is a positive integer; each round of operation includes bit restructuring, nonlinear state filtering operation and variable initialization mode operation.

103

processing the output results after the N-round operations in turn using bit restructuring, nonlinear state filtering operation and discarding the output, as well as the variable work mode operation;

104

implementing following processes in each clock tick and respectively in turn: bit restructuring, nonlinear state filtering operation, XOR operation, and variable work mode operations, to obtain the required pseudo-random sequence

# Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. SELIMIS et al.** High performance cryptographic engine PANAMA: hardware implementation. *Electronics, circuits and systems, 2004, ICECS 2004, Proceedings of the 2004 11th IEEE International Conference on Tel Aviv,* 13 December 2004, 575-578